# EUROPÄISCHE PATENTSCHRIFT

(11) **EP 0 562 470 B1**
(45) Veröffentlichungstag und Bekanntmachung des Hinweises auf die Patenterteilung: **18.12.1996**
(21) Anmeldenummer: 93104502.5
(22) Anmeldetag: 19.03.1993
(51) Int. Cl.: B62M 11/14

(54) **Schaltbares Tretlager für ein Fahrrad oder dergl.**
Crank gear charge for a bicycle or similar
Pédalier comprenant un changement de vitesse pour bicyclette ou un engin analogue

(30) Priorität: 25.03.1992 CH 934/92
(43) Veröffentlichungstag der Anmeldung: 29.09.1993
(73) Patentinhaber: Schlumpf, Florian, Masch.Ing.HTL, CH-7324 Vilters (CH)
(72) Erfinder: Schlumpf, Florian, Masch.Ing.HTL, CH-7324 Vilters (CH)
(74) Vertreter: Althoff, Gerhard

(56) Entgegenhaltungen:
- DE-A- 3 827 819
- GB-A- 419 998

## Beschreibung

Die Erfindung bezieht sich auf ein schaltbares Tretlagergetriebe für ein Fahrrad oder dergleichen, bestehend aus einem Tretlagergehäuse, einem Getriebegehäuse, einem Kettenrad, einer parallel dazu angeordneten Scheibe, einer das Tretlagergehäuse in axialer Richtung durchdringenden und mit Tretkurbeln in Wirkverbindung stehenden Antriebswelle sowie einer darin gelagerten und an den Enden jeweils mit einem Schaltglied wirkverbundenen Schaltachse, mittels welcher bei Betätigung des einen oder anderen Schaltgliedes ein in axialer Richtung verschiebbares Kupplungsstück mit in Umfangsrichtung verteilt an den einander zugewandten Seitenwänden angeordneten Ausnehmungen des Kettenrades oder der Scheibe in Eingriff bringbar ist.

Aus der DE-A 38 27 819 ist ein solches schaltbares Tretlagergetriebe für ein Fahrrad oder dergleichen bekannt, welches eine ein Tretlagergehäuse in axialer Richtung durchdringende Antriebswelle, zwei daran angeordnete Tretkurbeln sowie eine die Antriebswelle durchdringende und mit einem Kupplungsstück in Wirkverbindung stehende Schaltachse umfasst, mittels welcher für einen eine Drehzahländerung bewirkenden Schaltvorgang das Kupplungsstück durch eine axiale Schiebebewegung der Schaltachse mit einem Kettenrad oder mit einem Planetenträger in Eingriff bringbar ist. Bei diesem Tretlagergetriebe ist es erforderlich, dass die im Fahrbetrieb relativ zueinander drehenden Teile zur Vermeidung einer unerwünschten Blockierung desselben mit verhältnismässig grossen Ausnehmungen für das zustellbare Kupplungsstück zu versehen sind. Die derart ausgebildeten Ausnehmungen haben jedoch zur Folge, dass das Kupplungsstück mit relativ grossem Spiel in der Ausnehmung angeordnet und dadurch bei dem Benutzer das unangenehme und zu Unsicherheiten führende Gefühl entstehen kann, dass die erforderliche Wirkverbindung der kraftübertragenden Elemente nicht mehr gegeben ist.

Der Erfindung liegt die Aufgabe zugrunde, ein schaltbares Tretlagergetriebe gemäss der eingangs genannten Gattung so auszubilden und zu verbessern, dass unter Beibehaltung eines blockierfreien Schaltvorgangs eine in Drehrichtung orientierte spielfreie Verbindung der von den Tretkurbeln über die Antriebswelle und dem Kupplungsstück auf das Kettenrad oder auf die Scheibe übertragene Antriebskraft gewährleistet ist.

Diese Aufgabe wird gemäss der Erfindung dadurch gelöst, dass die einzelnen Ausnehmungen ausgehend von den einander zugewandten Seitenwänden in Richtung der axialen Zustellbewegung des Kupplungsstücks stufenförmig abgesetzt ausgebildet sind, derart, dass das dem Kettenrad oder der Scheibe zustellbare Kupplungsstück in einer ersten Phase jeweils mit in Drehrichtung der einzelnen Teile orientiertem Spiel in eine erste Ausnehmungsstufe und in einer zweiten Phase spielfrei, formschlüssig einrastend mit einer zweiten Ausnehmungsstufe der jeweiligen Ausnehmung in Eingriff bringbar ist.

Das erfindungsgemässe Tretlagergetriebe gewährleistet einen sicheren Schaltvorgang sowie eine exakte Wirkverbindung der einzelnen in Abhängigkeit der Drehzahländerung spielfrei zusammenwirkenden Elemente.

In weiterer Ausgestaltung ist das schaltbare Tretlagergetriebe mit einer Drehmomentsicherung versehen, mittels welcher ein gegen die Antriebsdrehrichtung der Tretkurbeln orientiertes und am Getriebegehäuse wirkendes Drehmoment verhindert wird. In weiterer Ausgestaltung ist die Drehmomentsicherung so ausgebildet, dass insbesondere bei Verwendung des Tretlagergetriebes mit Rücktrittsbremse ein entgegen beide Drehrichtungen der Tretkurbeln orientiertes und am Getriebegehäuse wirkendes Drehmoment verhindert wird.

Weiterhin ist es bei der einen Ausführungsform des Tretlagergetriebes vorteilhaft, den zwischen dem Getriebegehäuse und dem Kettenrad vorgesehenen Spalt durch eine Abdeckung zu verschliessen, so dass die einzelnen im Getriebegehäuse angeordneten Funktionselemente gegen das Eindringen von Spritzwasser, Staub und Schmutz gesichert sind.

Die Erfindung wird nachstehend anhand der Zeichnung beschrieben. Es zeigt:
- Fig. 1: ein in schematischer Ansicht dargestelltes und zu beiden Seiten mit einer Tretkurbel versehenes Tretlager mit integriertem, schaltbar ausgebildetem Tretlagergetriebe und damit wirkverbundener Drehmomentsicherung;
- Fig. 2: eine gemäss der Linie II-II in Fig.1 im Schnitt dargestellte erste Variante der in Seitenansicht dargestellten und mit dem Tretlagergetriebe wirkverbundenen Drehmomentsicherung;
- Fig. 3: eine gemäss der Linie II-II in Fig.1 im Schnitt dargestellte zweite Variante der mit dem Tretlagergetriebe wirkverbundenen Drehmomentsicherung;
- Fig. 4: eine erste Variante des in grösserem Massstab und in Schnittansicht dargestellten Tretlagergetriebes für das Tretlager gemäss Fig.1;
- Fig. 5: eine zweite Variante des in grösserem Massstab und in Schnittansicht dargestellten Tretlagergetriebes für das Tretlager gemäss Fig.1;
- Fig. 6: eine schematische Darstellung des Schaltablaufes der im Wesentlichen als Abwicklung dargestellten Funktionsteile des Tretlagergetriebes gemäss Fig.4 und Fig.5;
- Fig. 7: ein Teilstück des scheibenförmig ausgebildeten und in Ansicht dargestellten Kettenrades für das Tretlagergetriebe gemäss Fig.4 und Fig.5;
- Fig. 8: das gemäss der Linie VIII-VIII in Fig.7 im Schnitt dargestellte Kettenrad;
- Fig. 9: ein teilweise im Schnitt dargestelltes Teilstück des Tretlagergetriebes gemäss Fig.4 mit einer Abdeckung für das Getriebegehäuse;
- Fig.10: eine in grösserem Massstab dargestellte erste Variante der Befestigung der einen Tretkurbel mit der Antriebswelle sowie ein in einer ersten Stellung dargestelltes Schaltglied für die Betätigung einer Schaltachse;
- Fig.11: die Befestigung der einen Tretkurbel gemäss Fig.10 mit dem in einer zweiten Stellung dargestellten Schaltglied für die Betätigung der in einer zweiten Stellung dargestellten Schaltachse; und
- Fig.12: eine zweite Variante der Befestigung der Tretkurbel mit der Antriebswelle sowie das zugeordnete Schaltglied.

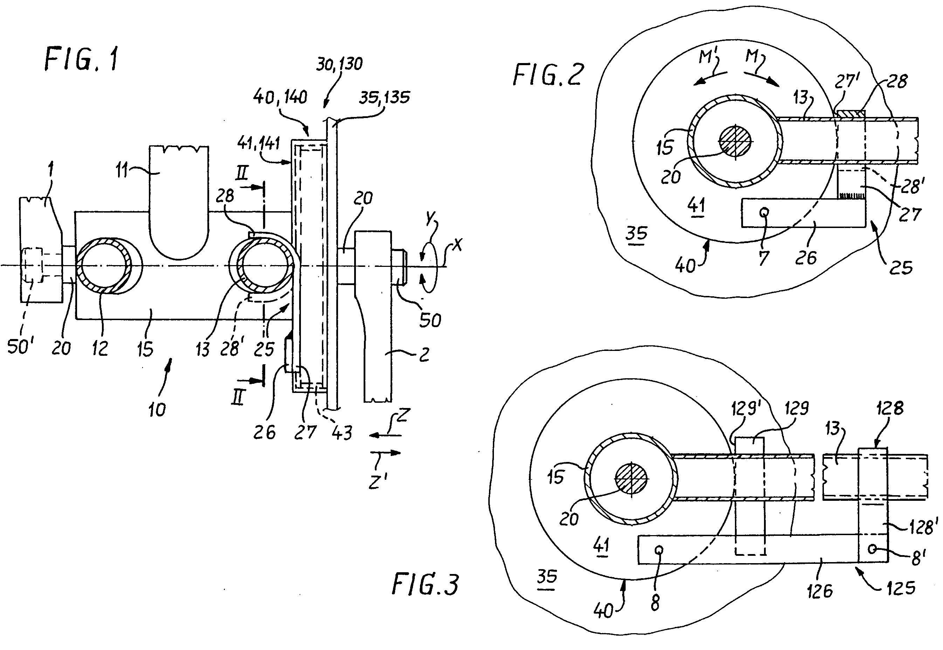

Fig.1 zeigt ein ausgehend von der Hinterradgabel (nicht dargestellt) gesehenes und in schematischer Ansicht dargestelltes Tretlager 10 für ein Fahrrad oder dergleichen. Das Tretlager 10 umfasst im wesentlichen ein Tretlagergehäuse 15, eine darin gelagerte und mit Tretkurbeln 1 und 2 in Wirkverbindung stehende Antriebswelle 20 sowie ein teilweise dargestelltes Kettenrad 35.

An dem Tretlager 10 ist ein ebenfalls mit der Antriebswelle 20 in Wirkverbindung stehendes und in der Gesamtheit mit 30 bezeichnetes, schematisch dargestelltes Tretlagergetriebe angeordnet und man erkennt ein dem teilweise dargestellten Kettenrad 35 zugeordnetes Getriebegehäuse 40. Die Betätigung des Tretlagergetriebes 30 erfolgt mittels der beiden Tretkurbeln 1 und 2, welche zusammen mit der Antriebswelle 20 um eine Achse X in Pfeilrichtung Y in dem Tretlagergehäuse 15 drehbar gelagert sind.

Die Schaltfunktion des Tretlagergetriebes 30, welche bei einer in Pfeilrichtung Z oder Z' orientierten Betätigung der in Fig.1 schematisch dargestellten Schaltglieder 50 und 50'

An dem Tretlagergehäuse 15 ist ein Rohr 11 sowie zwei im Abstand zueinander angeordnete Rohre 12 und 13 der Hinterradgabel eines nicht näher dargestellten Fahrradrahmens angeordnet. Das eine Rohr 11 sowie die beiden im Schnitt dargestellten Rohre 12 und 13 sind in nicht näher dargestellter Weise, beispielsweise durch eine Schweissverbindung, am Tretlagergehäuse 15 befestigt.

An der dem Rohr 13 zugewandten Rückwand 41 des Getriebegehäuses 40 ist eine mit dem Rohr 13 der Hinterradgabel (nicht dargestellt) in Eingriff stehende und in der Gesamtheit mit 25 bezeichnete Drehmomentsicherung angeordnet.
Die in Fig.1 und Fig.2 als erste Variante dargestellte Drehmomentsicherung 25 umfasst eine Lasche 26, einen Hebelarm 27 und mindestens ein daran angeordnetes Bogenstück 28. An dem Hebelarm 27 kann, wie in Fig.1 dargestellt, ein weiteres Bogenstück 28' angeordnet werden.
Fig.2 zeigt die teilweise im Schnitt gemäss der in Fig.1 eingezeichneten Linie II-II dargestellte Drehmomentsicherung 25 und man erkennt das Tretlagergehäuse 15, die schematisch dargestellte Antriebswelle 20, das teilweise dargestellte Kettenrad 35 sowie die etwa parallel zum Rohr 13 orientierte Lasche 26 mit dem daran angeordneten Hebelarm 27. Die Lasche 26 ist mittels Befestigungselemente, beispielsweise durch mindestens eine schematisch dargestellte Schraubverbindung 7 an der Rückwand 41 des Getriebegehäuses 40 befestigt. Die Lasche 26 mit dem orthogonal dazu angeordneten Hebelarm 27 ist derart an der Rückwand 41 befestigt, dass der Hebelarm 27 mit der dem Getriebegehäuse 40 zugewandten Anlagekante 27' etwa tangential anliegend gegen das Getriebegehäuse 40 gedrückt wird.
Der Hebelarm 27 hat, wie in Fig.1 im Profilquerschnitt dargestellt, mindestens das eine dem Rohr 13 entsprechend ausgebildete erste Bogenstück 28, welches formschlüssig mit dem Rohr 13 in Eingriff steht. An dem Hebelarm 27 kann zusätzlich ein zweites Bogenstück 28' angeordnet werden, derart, dass im wesentlichen die eine Hälfte des Rohres 13 (Fig.1) von den beiden Bogenstücken 28,28' umgriffen wird. Die beiden als formschlüssiges Halteglied ausgebildeten Bogenstücke 28,28' sind vorzugsweise am Hebelarm 27 angeformt.
Mittels der vorstehend beschriebenen und die Lasche 26, den Hebelarm 27 und das erste Bogenstück 28 umfassenden Drehmomentsicherung 25 wird, wie in Fig.2 dargestellt, ein entgegen der Drehrichtung der Tretkurbeln 1 und 2 und mit Pfeilrichtung M bezeichnetes und im wesentlichen an der Rückwand 41 des Getriebegehäuses 40 wirkendes Drehmoment verhindert. Mittels dem zweiten, zusätzlichen Bogenstück 28' wird ein entgegengesetzt wirkendes und mit Pfeilrichtung M' bezeichnetes und an der Rückwand 41 des Getriebegehäuses 40 wirkendes Drehmoment verhindert, welches insbesondere bei Verwendung einer sogenannten Rücktrittsbremse (nicht dargestellt) entstehen kann.

Fig.3 zeigt als zweite Ausführungsvariante eine am Getriebegehäuse 40 angeordnete und in Seitenansicht dargestellte Drehmomentsicherung 125 und man erkennt das Tretlagergehäuse 15, die schematisch dargestellte Antriebswelle 20, das teilweise dargestellte Kettenrad 35 sowie das Getriebegehäuse 40.
Die Drehmomentsicherung 125 umfasst im wesentlichen eine an der Rückwand 41 des Getriebegehäuses 40 befestigte und etwa parallel zum Rohr 13 orientierte Lasche 126, einen daran angeordneten und befestigten Hebelarm 129 sowie ein im Abstand dazu angeordnetes Halteglied 128. Die Lasche 126 mit dem daran angeordneten Hebelarm 129 ist derart an der Rückwand 41 befestigt, dass der Hebelarm 129 mit der dem Getriebegehäuse 40 zugewandten Anlagekante 129' etwa tangential anliegend gegen das Getriebegehäuse 40 gedrückt wird.
Die Lasche 126 der Drehmomentsicherung 125 ist beispielsweise durch mindestens eine schematisch dargestellte Schraubverbindung 8 an der Rückwand 41 befestigt. Das im oberen Bereich in nicht dargestellter Weise das Rohr 13 klauenförmig umgreifende Halteglied 128 ist mittels angeformter und parallel zueinander nach unten gerichteter Stege 128' (nur ein Steg 128' dargestellt) und einer Schraubverbindung 8' an der Lasche 126 befestigt.

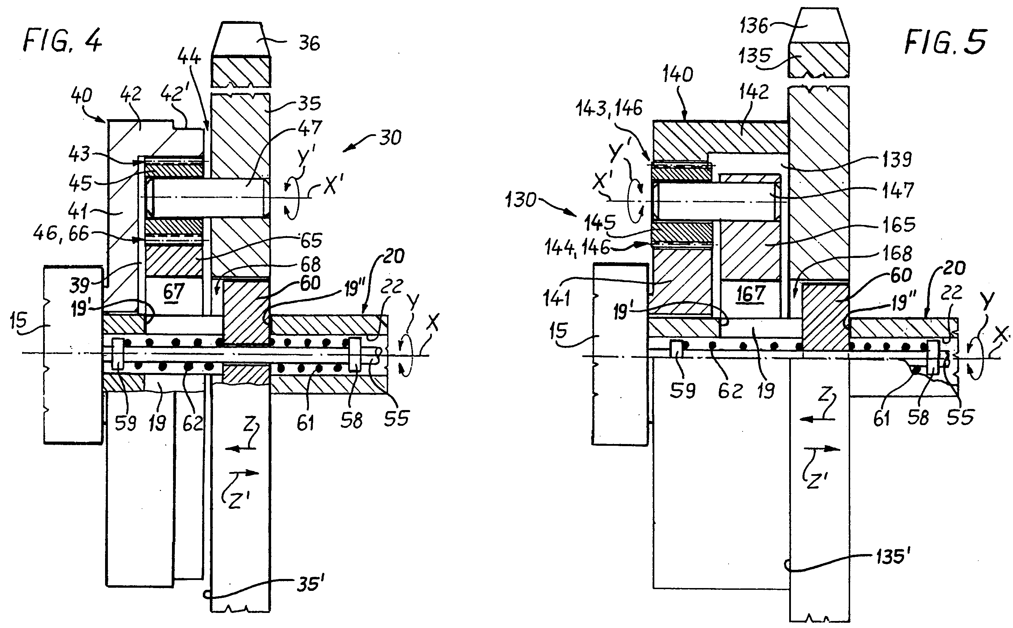

Fig.4 zeigt als erste Variante das in grösserem Massstab und in Schnittansicht dargestellte Getriebe 30 und man erkennt das teilweise dargestellte Tretlagergehäuse 15, die darin in nicht näher dargestellter Weise gelagerte Antriebswelle 20, das Kettenrad 35 mit der Verzahnung 36 sowie das im Abstand 44 zur Seitenwand 35' angeordnete Getriebegehäuse 40.
Das Getriebegehäuse 40 umfasst die Rückwand 41 sowie ein daran angeformtes Ringteil 42, welches an der Innenseite mit einer Innenverzahnung 43 versehen ist. Die Teile 41 und 42 bilden zusammen einen Gehäuseinnenraum 39.
An dem Kettenrad 35 ist mindestens ein um die Achse X' eines an dem Kettenrad 35 gelagerten und befestigten Lagerbolzens 47 in Pfeilrichtung Y' drehbar gelagertes Planetenrad 45 angeordnet. Das Planetenrad 45 steht einerseits mit seiner Aussenverzahnung 46 mit der Innenverzahnung 43 des Getriebegehäuses 40 und andererseits mit einer Aussenverzahnung 66 einer auf der Antriebswelle 20 gelagerten Scheibe 65 in Eingriff. Die als sogenanntes Sonnenrad ausgebildete Scheibe 65 ist im Innenraum 39 des Getriebegehäuses 40 angeordnet.
Bei einer nicht näher dargestellten Variante sind an dem Kettenrad 35 zwei diametral gegenüberliegend angeordnete und mit der Scheibe 65 und der Innenverzahnung 43 des Getriebegehäuses 40 in Eingriff stehende Planetenräder 45 vorgesehen. Es können jedoch auch mehrere, beispielsweise gleichmässig am Umfang verteilt angeordnete Planetenräder 45 vorgesehen sein.
In der mit einer in axialer Richtung orientierten Bohrung 22 Versehenen Antriebswelle 20 ist eine als Stössel wirkende Schaltachse 55 angeordnet, auf welcher ein Kupplungsstück 60 gelagert ist. Zu beiden Seiten des Kupplungsstücks 60 ist je eine Druckfeder 61,62 angeordnet. Die beiden am Kupplungsstück 60 anliegenden Druckfedern 61,62 sind durch in axialer Richtung an der Schaltachse 55 ver- und feststellbare Stellglieder 58 und 59 in bezug auf das Kupplungsstück 60 kraftabhängig einstellbar.
Das in einer Ausnehmung 68 des Kettenrades 35 angeordnete und damit in Wirkverbindung stehende sowie in einer, in axialer Richtung orientierten, schlitzförmigen Ausnehmung 19 der Antriebswelle 20 angeordnete Kupplungsstück 60 Kann, wie in Fig.4 mit Pfeilrichtung Z dargestellt, von dem Kettenrad 35 mittels der Schaltachse 55 in eine in der Scheibe 65 vorgesehene Ausnehmung 67 geschoben werden. In dieser nicht näher dargestellten Stellung steht die Antriebswelle 20 und das Kupplungsstück 60 mit der Scheibe 65 und diese über das Planetenrad 45 mit der Innenverzahnung 43 des Getriebegehäuses 40 in Eingriff. Bei der in Pfeilrichtung Z' orientierten Rückstellbewegung Kann das Kupplungsstück 60, wie in Fig.4 dargestellt, wieder mit dem Kettenrad 35 in Eingriff gebracht werden. Die axiale Schiebebewegung des Kupplungsstücks 60 erfolgt im wesentlichen mittels der jeweils an den Tretkurbeln 1,2 angeordneten und mit der Schaltachse 55 wirkverbundenen Schaltglieder 50,50' (Fig.1).

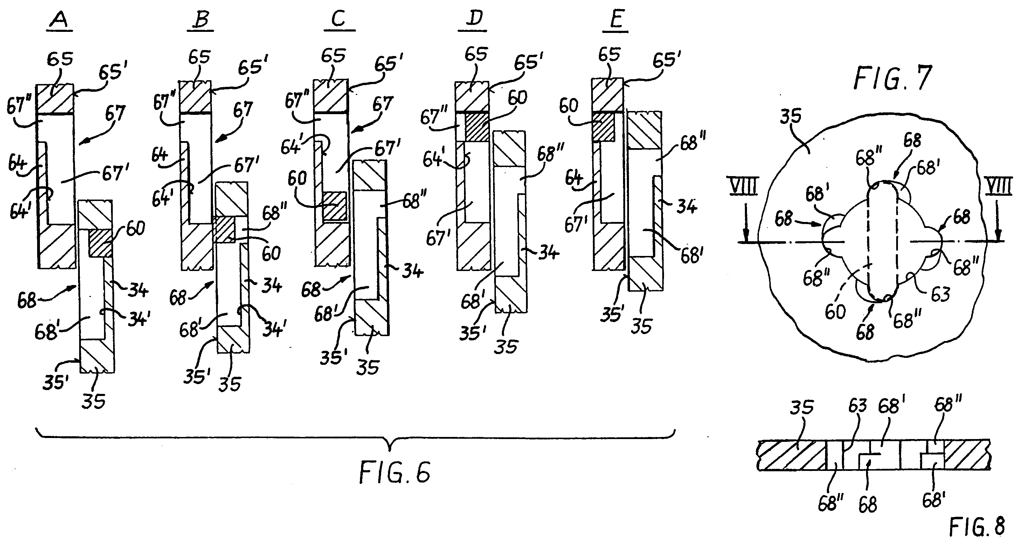

Fig.5 zeigt als zweite Variante ein in grösserem Massstab und in Schnittansicht dargestelltes Getriebe 130 und man erkennt das Tretlagergehäuse 15, die darin in nicht näher dargestellter Weise gelagerte Antriebswelle 20, ein Kettenrad 135 mit einer Verzahnung 136 sowie ein an der Seitenwand 135' des Kettenrades 135 angeordnetes Getriebegehäuse 140. Die mit der schlitzförmigen und durch die beabstandeten Innen Kanten 19' und 19'' begrenzten Ausnehmung 19 versehene Antriebswelle 20 sowie die Teile 55,58,59,60,61 und 62 sind analog der einzelnen, vorstehend in Verbindung mit Fig. 4 beschriebenen Teile ausgebildet.
Abweichend von der ersten Variante gemäss Fig.4, ist bei dem Ausführungsbeispiel gemäss Fig.5 das im wesentlichen aus einem mit einer Innenverzahnung 143 versehenen Ringteil 142 und einer parallel zum Kettenrad 135 angeordneten Rückwand 141 gebildete Getriebegehäuse 140 seitlich an dem Kettenrad 135 angeordnet und mit nicht dargestellten Mitteln, beispielsweise durch eine Schraubverbindung an der Seitenwand 135' des Kettenrades 135 befestigt. Korrespondierend zu der Innenverzahnung 143 des Ringteils 142 ist die mit einer Aussenverzahnung 144 versehene Rückwand 141 angeordnet, welche in nicht näher dargestellter Weise mit dem Tretlagergehäuse 15 wirkverbunden ist. Die an dem Ringteil 142 sowie an der Rückwand 141 angeordneten Verzahnungen 143 und 144 bilden zusammen eine Kreisringförmige Verzahnung (nicht dargestellt) für ein oder mehrere Planetenräder 145. Das Ringteil 142 und die als sogenanntes Sonnenrad ausgebildete Rückwand 141 sind über mindestens ein mit einer Aussenverzahnung 146 versehenes Planetenrad 145 miteinander wirkverbunden. Vorzugsweise sind zwei oder mehrere diametral zueinander angeordnete Planetenräder 145 vorgesehen, welche jeweils mit der Aussenverzahnung 146, mit der Innenverzahnung 143 des Ringteils 142 sowie mit der Aussenverzahnung 144 der Rückwand 141 in Eingriff stehen. Die Rückwand 141 und das Ringteil 142 bilden einen durch die Seitenwand 135' des Kettenrades 135 begrenzten Innenraum 139.

Im Innenraum 139 ist eine als Planetenträger ausgebildete und in nicht näher dargestellter Weise auf der Antriebswelle 20 gelagerte Scheibe 165 angeordnet, an welcher ein Lagerbolzen 147 mit nicht dargestellten Mitteln befestigt ist. An dem Lagerbolzen 147 ist das um die Längsachse X' desselben in Pfeilrichtung Y' drehbare und mit der Innenverzahnung 143 des Ringteils 142 sowie der Aussenverzahnung 144 der Rückwand 141 in Eingriff stehende Planetenrad 145 gelagert.

Das in einer Ausnehmung 168 des Kettenrades 135 angeordnete und damit in Wirkverbindung stehende Kupplungsstück 60 ist, wie vorstehend in Verbindung mit Fig.4 beschrieben, in Pfeilrichtung Z in eine Ausnehmung 167 der Scheibe 165 schiebbar (nicht dargestellt), so dass die Antriebswelle 20 über das Kupplungsstück 60 mit der Scheibe 165 in Eingriff steht. Die in Pfeilrichtung Z,Z' orientierte Schiebebewegung des Kupplungsstücks 60 erfolgt jeweils entgegen oder mit der Wirkung (Rückstellkraft) der Druckfeder 62 oder 61.

Der Schaltablauf des Getriebes 30 erfolgt, wie bereits erwähnt, im wesentlichen durch die in Pfeilrichtung Z oder Z' orientierte Schiebebewegung der Schaltachse 55, mit welcher das mit der Antriebswelle 20 in Wirkverbindung stehende Kupplungsstück 60, wie nachstehend anhand von Fig.6 beschrieben wird, entweder mit der Scheibe 65 oder aber mit dem Kettenrad 35 in Eingriff gebracht wird.

Fig.6 zeigt in schematischer Darstellung den in einzelnen Stellungen A bis E dargestellten Schaltablauf des Tretlagergetriebes 30 mit den wesentlichen Funktionsteilen und man erkennt jeweils ein als Abwicklung dargestelltes Teilstück des Kettenrades 35 und ein Teilstück der Scheibe 65 sowie das im Profilquerschnitt und in Abhängigkeit der Drehbewegung der Teile 35 und 65 in entsprechenden Stellungen dargestellte Kupplungsstück 60.

Die Scheibe 65 ist wie bereits erwähnt an der dem Kettenrad 35 zugewandten Seitenwand 65' mit mehreren am Umfang verteilt angeordneten Ausnehmungen 67 versehen. In Fig.6 ist eine einzelne, in bezug auf die Seitenwand 65' der Scheibe 65 in Richtung der Zustellbewegung Z' (Fig. 4) des Kupplungsstücks 60 orientierte und stufenförmig abgesetzt ausgebildete Ausnehmung 67 dargestellt. Die in der Gesamtheit mit 67 bezeichnete Ausnehmung hat eine in Umfangsrichtung orientierte und durch eine Wand 64 begrenzte erste Ausnehmungsstufe 67' sowie eine in bezug auf die Innenfläche 64' der Wand 64 abgesetzte und in axialer Bewegungsrichtung des Kupplungsstücks 60 orientierte zweite Ausnehmungsstufe 67''. Im dargestellten Ausführungsbeispiel ist die zweite Ausnehmungsstufe 67'' als eine die Wand 64 durchdringende Aussparung ausgebildet, in welche das zustellbare Kupplungsstück 60 formschlüssig einrasten kann.

Das Kettenrad 35 ist wie erwähnt an der der Scheibe 65 zugewandten Seitenwand 35' mit mehreren am Umfang verteilt angeordneten Ausnehmungen 68 versehen. In Fig.6 ist eine einzelne, in bezug auf die Seitenwand 35' des Kettenrades 35 in Richtung der Zustellbewegung Z (Fig. 4) des Kupplungsstücks 60 orientierte und stufenförmig abgesetzt ausgebildete Ausnehmung 68 dargestellt. Die in der Gesamtheit mit 68 bezeichnete Ausnehmung hat eine in Umfangsrichtung orientierte und durch eine Wand 34 begrenzte erste Ausnehmungsstufe 68' sowie eine in bezug auf die Innenfläche 34' der Wand 34 abgesetzte und in axialer Bewegungsrichtung des Kupplungsstücks 60 orientierte zweite Ausnehmungsstufe 68''. Im dargestellten Ausführungsbeispiel ist die zweite Ausnehmungsstufe 68'' als eine die Wand 34 durchdringende Aussparung ausgebildet, in welche das zustellbare Kupplungsstück 60 formschlüssig einrasten kann.

Bei der mit A bezeichneten Stellung ist das im Profilquerschnitt dargestellte Kupplungsstück 60 in der zweiten Ausnehmungsstufe 68'' des Kettenrades 35 formschlüssig angeordnet. In dieser Stellung ist die mit den Tretkurbeln 1,2 (Fig.1) in Wirkverbindung stehende Antriebswelle 20 über das Kupplungsstück 60 mit dem Kettenrad 35 (Fig.4) wirkverbunden und zusammen mit diesem um die horizontale Achse X der Antriebswelle 20 drehbar.

Bei der mit B bezeichneten Stellung ist das Kupplungsstück 60 mittels der Schaltachse 55 (Fig.4) aus der zweiten Ausnehmungsstufe 68'' des Kettenrades 35 geschoben und gegen die Seitenwand 65' der Scheibe 65 gedrückt. Bei gleichzeitiger Drehbewegung der Antriebswelle 20 um die horizontale Achse X (Fig.4) gleitet das damit wirkverbundene Kupplungsstück 60 solange entlang der Seitenwand 65' bis dieses mittels der Schaltachse 55 (Fig.4) in die erste Ausnehmungsstufe 67' der Scheibe 65 geschoben wird (Stellung C).

Bei den mit C und D bezeichneten Stellungen gleitet das bereits in die erste Ausnehmungsstufe 67 der Scheibe 65 geschobene und gegen die Wand 64 gedrückte Kupplungsstück 60 entlang der Wandinnenfläche 64' bis dieses in die relativ dazu abgesetzt ausgebildete zweite Ausnehmungsstufe 67'' der Scheibe 65 einrastet (Stellung E).

Bei der Stellung E ist das Kupplungsstück 60 in der zweiten Ausnehmungsstufe 67'' der Scheibe 65 formschlüssig angeordnet. In dieser Stellung ist die mit den Tretkurbeln 1,2 (Fig.1) in Wirkverbindung stehende Antriebswelle 20 über das Kupplungsstück 60 mit der Scheibe 65 wirkverbunden und zusammen mit diesem um die horizontale Achse X der Antriebswelle 20 (Fig. 4) drehbar.

An dieser Stelle wird darauf hingewiesen, dass der Schaltungsablauf für die in Fig.5 dargestellte zweite Variante des Tretlagergetriebes 130 weitgehend analog dem vorstehend in Verbindung mit Fig.6 beschriebenen Schaltungsablauf für das Tretlagergetriebe 30 gemäss Fig.4 erfolgt.

Fig.7 zeigt ein in Ansicht dargestelltes Teilstück des scheibenförmig dargestellten Kettenrades 35, welches in Fig.8 gemäss der Linie VIII-VIII in Fig.7 im Schnitt und Draufsicht dargestellt ist. Das Kettenrad 35 wird von einer der Antriebswelle 20 entsprechend ausgebildeten Bohrung 63 durchdrungen. Am äusseren Umfang der Bohrung 63 sind die jeweils mit der ersten Ausnehmungsstufe 68' und zweiten Ausnehmungsstufe 68'' stufenförmig abgesetzt ausgebildeten und gleichmässig verteilt angeordneten Ausnehmungen 68 vorgesehen.

Wie in Fig.7 dargestellt, ist das Kupplungsstück 60 mit den beiden etwa kreisbogenförmig abgerundeten Enden in den beiden diametral gegenüberliegend angeordneten zweiten Ausnehmungsstufen 68'' des Kettenrades 35 angeordnet. Die zweiten Ausnehmungsstufen 68'' der Ausnehmungen 68 sind zur Erreichung einer formschlüssig einrastenden Aufnahme des Kupplungsstücks 60 ebenfalls kreisbogenförmig ausgebildet.

An dieser Stelle wird darauf hingewiesen, dass die jeweils mit den beiden Ausnehmungsstufen 67' und 67'' stufenförmig ausgebildeten Ausnehmungen 67 in der Scheibe 65 oder 165 sowie die jeweils mit den beiden Ausnehmungsstufen 68' und 68'' stufenförmig ausgebildeten Ausnehmungen 68 in dem Kettenrad 35 oder 135 analog ausgebildet sind.

Bei einer nicht näher dargestellten Ausführungsvariante können die in dem Kettenrad 35 bzw. 135 oder in der Scheibe 65 bzw. 165 angeordneten und sich an die jeweilige, durch die Wand 34 oder 64 begrenzte erste Ausnehmungsstufe 67' und 68' schliessende zweite Ausnehmungsstufe 67'' und 68'' ebenfalls durch eine nicht dargestellte Rückwand begrenzt sein. Bei dieser Ausführungsvariante sind die einzelnen, stufenförmig abgesetzt ausgebildeten Ausnehmungen 67 und 68 im Kettenrad 35 bzw. 135 sowie in der Scheibe 65 bzw. 165 durch eine nicht dargestellte Rückwand geschlossen ausgebildet.

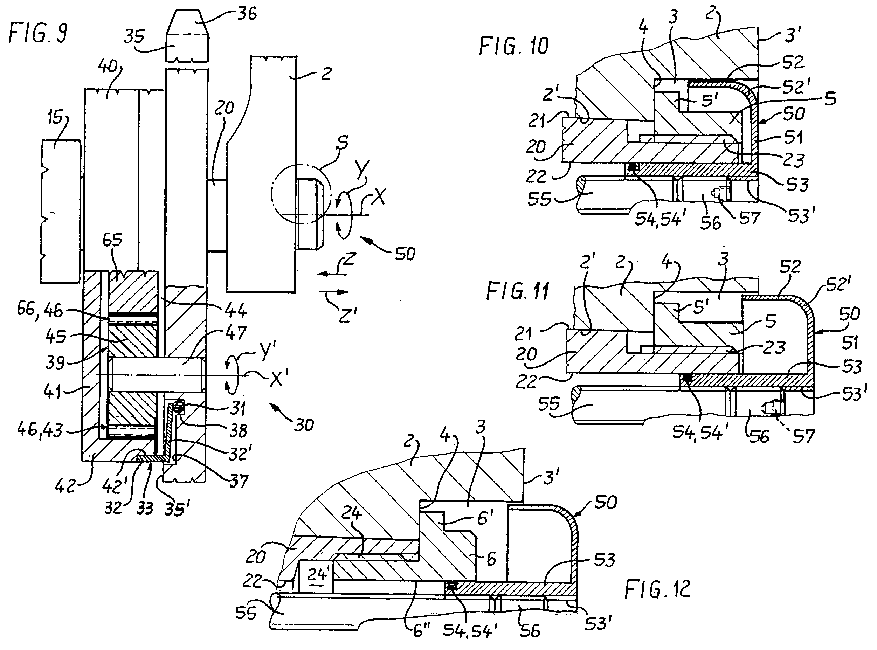

Fig.9 zeigt das in grösserem Massstab dargestellte Tretlagergetriebe 30 und man erkennt das Tretlagergehäuse 15, die darin gelagerte Antriebswelle 20 mit der Tretkurbel 2 und das eine, in dieser Schaltstellung seitlich aus der Tretkurbel 2 hervorstehende Schaltglied 50. Weiterhin erkennt man das teilweise im Schnitt dargestellte Getriebegehäuse 40 und das Kettenrad 35 mit der Verzahnung 36 sowie die Teile 45,47 und 65.
Bei dieser Ausführungsform ist an dem Getriebegehäuse 40 eine Abdeckung 33 angeordnet und mit nicht dargestellten Mitteln befestigt. Mittels der Abdeckung 33 wird der zwischen dem Getriebegehäuse 40 und dem Kettenrad 35 vorgesehene Spalt 44 und somit der Innenraum 39 zwischen dem Getriebegehäuse 40 und der Seitenwand 35' des Kettenrades 35 verschlossen.

Zur Befestigung der Abdeckung 33 an dem Getriebegehäuse 40 ist am äusseren Umfang des Ringteils 42 eine umlaufende Ausnehmung 42' vorgesehen. Die Abdeckung 33 ist mit einem Flansch 32 in der Ausnehmung 42' des Ringteils 42 mit nicht näher dargestellten Mitteln befestigt. Die Abdeckung 33 umfasst den Flansch 32 sowie einen daran angeformten, nach innen gerichteten, kreisringförmigen Steg 32', welcher in einer entsprechend kreisringförmig ausgebildeten Ausnehmung 37 des Kettenrades 35 angeordnet ist. Im Anschluss an die Ausnehmung 37 ist an der Seitenwand 35' des Kettenrades 35 eine umlaufende Nut 38 vorgesehen. In der Nut 38 ist eine kreisringförmige Dichtung 31, beispielsweise ein O-Ring-Dichtung angeordnet. Der am Flansch 32 angeformte Steg 32' ist in bezug zum Flansch 32 derart abgewinkelt, dass im zusammengebauten Zustand der Teile 35 und 40 der Steg 32' mit entsprechender Vorspannung gegen die in der Nut 38 angeordnete Dichtung 31 gepresst wird.

Mit der zwischen dem Getriebegehäuse 40 und dem Kettenrad 35 des Tretlagergetriebes 30 angeordneten Abdeckung 33 wird mit einfachen konstruktiven Mitteln ein Eindringen von Spritzwasser, Staub und Schmutz in den Innenraum 39 des Getriebegehäuses 40 bzw. ein Austreten eingefüllter Schmiermittel für die Getriebeelemente 45,65 verhindert.

Fig.10 zeigt in einer ersten Stellung und Fig.11 in einer zweiten Stellung das in Schnittansicht sowie in grösserem Massstab dargestellte und in Fig.9 durch einen Kreis S bezeichnete Schaltglied 50 und man erkennt ein Teilstück der Antriebswelle 20 sowie ein Teilstück der damit wirkverbundenen Tretkurbel 2, welche mittels einem als Schraubenmutter ausgebildeten Stellglied 5 auf der Antriebswelle 20 positioniert wird.
Die mit einer konischen Ausnehmung 2' versehene Tretkurbel 2 ist auf der mit einem konischen Teilstück 21 versehenen Antriebswelle 20 angeordnet und befestigt. Mittels dem mit einem Gewinde 23 der Antriebswelle 20 in Eingriff stehenden und sich mit einem kreisringförmigen Teil 5' an einer Anlagefläche 4 der Tretkurbel 2 abstützenden Stellglied 5 ist die Tretkurbel 2 mit der Antriebswelle 20 wirkverbunden.
Das etwa haubenförmig ausgebildete Schaltglied 50 umfasst ein mit einem Innengewinde 53' und einer Ringnut 54 für eine Dichtung 54' versehenes Nabenteil 53, welches in der die Antriebswelle 20 in axialer Richtung durchdringenden Bohrung 22 angeordnet ist. An dem Nabenteil 53 ist eine scheibenförmig ausgebildete Druckfläche 51 und daran ein Ringteil 52 angeformt, wobei das Ringteil 52 in eine Ausnehmung 3 der Tretkurbel 2 einschiebbar ist. Der Übergang von der Druckfläche 51 zum Ringteil 52 des Schaltgliedes 50 ist vorzugsweise als Kreisbogenteil 52' ausgebildet.
Das Schaltglied 50 ist mittels dem Nabenteil 53 mit der die Antriebswelle 20 in axialer Richtung durchdringenden Schaltachse 55 wirkverbunden und durch eine in das Nabenteil 53 des Schaltgliedes 50 einschraubbare und beispielsweise mit einem Innensechskant 57 versehene Stellschraube 56 gesichert. Die Befestigung des anderen Schaltgliedes 50' (Fig.1) an der Schaltachse 55 ist analog dem Schaltglied 50 ausgebildet.

Bei der Montage werden die beiden Tretkurbeln 1 und 2 jeweils mit dem Stellglied 5 auf der Antriebswelle 20 befestigt. Das Schaltglied 50 wird dabei soweit in die Tretkurbel 2 eingeschraubt, dass es in betätigter (gedrückter) Stellung, wie in Fig.10 dargestellt, mit der Aussenkante 3' der Tretkurbel 2 bündig abschliesst. Mit dem derart ausgebildeten und in axialer Richtung beliebig positionierbaren Schaltglied 50,50' können handelsübliche und mit unterschiedlichen Breiten versehene Tretkurbeln verwendet werden. Das bei entsprechender Schaltstellung auf der betreffenden Seite herausstehende Schaltglied 50 oder 50' gewährleistet einen optimalen Schutz gegen Verschmutzung, da das Ringteil 52 auch bei herausstehendem Schaltglied 50, wie in Fig.11 dargestellt, noch mit einem Teilstück des Ringteils 52 in der Ausnehmung 3 der Tretkurbel 2 angeordnet ist.

Fig.12 zeigt eine zweite Variante der Befestigung der Tretkurbeln 1 und 2 an der Antriebswelle 20. Bei dieser Variante ist die mit der in axialer Richtung orientierten Bohrung 22 für die Schaltachse 55 versehene Antriebswelle 20 stirnseitig mit einer in bezug auf die Bohrung 22 abgesetzt ausgebildeten Bohrung 24' sowie mit einem Innengewinde 24 versehen.
Mittels einem mit dem Innengewinde 24 der Antriebswelle 20 in Eingriff stehenden und sich mit einem kreisringförmigen Teil 6' an der Anlagekante 4 der Tretkurbel 2 abstützenden Stellglied 6 ist die Tretkurbel 2 mit der Antriebswelle 20 wirkverbunden. Das Stellglied 6 wird von einer Bohrung 6'' durchdrungen, in welcher das Nabenteil 53 abgedichtet in axialer Richtung verstellbar angeordnet ist. Die Teile 50,55 und 56 sind analog der ersten Variante gemäss Fig.10 und 11 ausgebildet.

## Patentansprüche

1. Schaltbares Tretlagergetriebe für ein Fahrrad oder dergleichen, bestehend aus einem Tretlagergehäuse (15), einem Getriebegehäuse (40;140), einem Kettenrad (35;135), einer parallel dazu angeordneten Scheibe (65;165), einer das Tretlagergehäuse (15) in axialer Richtung durchdringenden und mit Tretkurbeln (1,2) in Wirkverbindung stehenden Antriebswelle (20) sowie einer darin gelagerten und an den Enden jeweils mit einem Schaltglied (50,50') wirkverbundenen Schaltachse (55), mittels welcher bei Betätigung des einen oder anderen Schaltgliedes ein in axialer Richtung verschiebbares Kupplungsstück (60) mit in Umfangsrichtung verteilt an den einander zugewandten Seitenwänden angeordneten Ausnehmungen des Kettenrades oder der Scheibe in Eingriff bringbar ist, **dadurch gekennzeichnet**, dass die einzelnen Ausnehmungen (67,68;167;168) ausgehend von den einander zugewandten Seitenwänden (35',65';135',165') in Richtung der axialen Zustellbewegung des Kupplungsstücks (60) stufenförmig abgesetzt ausgebildet sind, derart, dass das dem Kettenrad (35;135) oder der Scheibe (65;165) zustellbare Kupplungsstück (60) in einer ersten Phase jeweils mit in Drehrichtung der einzelnen Teile orientiertem Spiel in eine erste Ausnehmungsstufe (67',68') und in einer zweiten Phase spielfrei, formschlüssig einrastend mit einer zweiten Ausnehmungsstufe (67'',68'') der jeweiligen Ausnehmung (67,68;167;168) in Eingriff bringbar ist.

2. Schaltbares Tretlagergetriebe nach Anspruch 1, **dadurch gekennzeichnet**, dass die in dem Kettenrad (35;135) sowie in der Scheibe (65;165) angeordneten ersten Ausnehmungsstufen (67',68') jeweils durch eine ausgehend von den einander zugewandten Seitenwänden (35',65';135',165') in Richtung der Zustellbewegung des Kupplungsstücks (60) angeordnete Wand (34, 64) des Kettenrades beziehungsweise der Scheibe begrenzt sind, wobei die mit den ersten Ausnehmungsstufen (67',68') in Verbindung stehenden zweiten Ausnehmungsstufen (67'',68'') in der Wand (34,64) angeordnet sind.

3. Schaltbares Tretlagergetriebe nach den Ansprüchen 1 und 2, **dadurch gekennzeichnet**, dass die in dem Kettenrad (35;135) sowie in der Scheibe (65;165) vorgesehenen zweiten Ausnehmungsstufen (67'',68'') jeweils als eine die Wand (34,64) des Kettenrades und der Scheibe durchdringende Aussparung ausgebildet sind.

4. Schaltbares Tretlagergetriebe nach einem der Ansprüche 1 bis 3, **dadurch gekennzeichnet**, dass die Scheibe (65) als ein mit einer Aussenverzahnung (66) versehenes Sonnenrad ausgebildet ist und das Getriebegehäuse (40) ein mit einer Innenverzahnung (43) versehenes Ringteil (42) aufweist, wobei die Scheibe (65) sowie das Getriebegehäuse (40) mit ihren Verzahnungen (66,43) mit mindestens einem am Kettenrad (35) gelagerten und mit einer Aussenverzahnung (46) versehenen Planetenrad (45) in Eingriff stehend wirkverbunden sind.

5. Schaltbares Tretlagergetriebe nach einem der Ansprüche 1 bis 3, **dadurch gekennzeichnet**, dass an der zwischen dem Kettenrad (135) und der Rückwand (141) des Getriebegehäuses (140) angeordneten Scheibe (165) mindestens ein mit einer Aussenverzahnung (146) versehenes Planetenrad (145) gelagert ist, welches einerseits mit der als Sonnenrad ausgebildeten und mit einer Aussenverzahnung (144) versehenen Rückwand (141) und andererseits mit einem mit einer Innenverzahnung (143) versehenen und in radialer Richtung im Abstand zur Aussenverzahnung (144) der Rückwand (141) angeordneten Ringteil (142) des Getriebegehäuses (140) wirkverbunden ist.

6. Schaltbares Tretlagergetriebe nach Anspruch 1, **dadurch gekennzeichnet**, dass ein zwischen dem Kettenrad (35) und dem Getriebegehäuse (40) vorgesehener Spalt (44) durch eine im Profilquerschnitt etwa 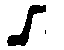 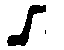 -förmig ausgebildete Abdeckung (33) verschlossen ist, wobei die Abdeckung (33) einerseits mit einem Flansch (32) am Getriebegehäuse (40) befestigt und andererseits mit einem radial nach innen gerichteten, kreisringförmigen Steg (32') mit einer in der Seitenwand (35') des Kettenrades (35) angeordneten Dichtung (31) unter Vorspannung abdichtend wirkverbunden ist.

7. Schaltbares Tretlagergetriebe nach Anspruch 1, **dadurch gekennzeichnet**, dass jede Tretkurbel (1,2) eine zur Aufnahme eines auf die Antriebswelle (20) aufschraubbaren Stellgliedes (5) sowie des Schaltgliedes (50,50') ausgebildete Ausnehmung (3) aufweist, wobei das einzelne Schaltglied (50,50') mit einem angeformten Nabenteil (53) mit der Schaltachse (55) wirkverbunden in axialer Richtung der Antriebswelle (20) in einer Bohrung (22) derselben abgedichtet verschiebbar geführt ist.

8. Schaltbares Tretlagergetriebe nach Anspruch 7, **dadurch gekennzeichnet**, dass das einzelne Schaltglied (50,50') mit einem haubenförmig angeformten Ringteil (52) versehen ist, wobei das Ringteil (52) derart ausgebildet ist, dass dieses in jeder Stellung des einzelnen Schaltgliedes (50,50') in der Ausnehmung (3) der jeweiligen Tretkurbel (1,2) angeordnet ist.

9. Schaltbares Tretlagergetriebe nach Anspruch 1, **dadurch gekennzeichnet**, dass die beiden Tretkurbeln (1,2) je mittels einem in eine Gewindebohrung (24,24') einschraubbaren Stellglied (6) an der Antriebswelle (20) befestigt sind und das haubenförmige Schaltglied (50,50') jeweils mit dem Nabenteil (53) in einer Bohrung (6'') des Stellgliedes (6) abgedichtet verschiebbar geführt ist.

10. Schaltbares Tretlagergetriebe nach Anspruch 1, **dadurch gekennzeichnet**, dass eine Drehmomentsicherung (25;125) vorgesehen ist, welche eine am Getriebegehäuse befestigte und in Richtung eines Rahmenteils orientierte Lasche (26;126) sowie einen tangential am Getriebegehäuse anliegenden und mit einem kreisbogenförmigen Teilstück mit dem rohrförmigen Rahmenteil wirkverbundenen Hebelarm (27;129) aufweist.

## Claims

1. Shiftable pedal bearing gear for a bicycle or the like, consisting of a pedal bearing housing (15), a gear housing (40;140), a chain wheel (35;135), a disc (65;165) arranged parallel thereto, a drive shaft (20) which axially penetrates the pedal bearing housing (15) and cooperates with pedal cranks (1,2) and a shift shaft (55) which is mounted therein, cooperates with a shift element (50,50') at the respective ends and by means of which an axially movable coupling piece (60) can be brought into engagement with recesses in the chain wheel or the disc peripherally distributed on the mutually facing lateral walls during actuation of one or other shift element, characterised in that the individual recesses (67,68;167;168) are offset in the manner of steps emanating from the mutually facing lateral walls (35',65';135',165') in the direction of the axial advancing movement of the coupling piece (60) in such a way that the coupling piece (60) which can be advanced to the chain wheel (35;135) or the disc (65;165) can be brought into engagement in a first phase into a first recess step (67',68') with play orientated in the direction of rotation of the individual parts in each case and in a second phase without play in an interlocking manner with a second recess step (67'',68'') of the respective recess (67,68;167;168).

2. Shiftable pedal bearing gear according to claim 1, characterised in that the first recess steps (67',68') arranged in the chain wheel (35;135) and in the disc (65;165) are limited in each case by a wall (34,64) of the chain wheel or of the disc arranged so as to emanate from the mutually facing lateral walls (35',65';135',165') in the direction of the advancing movement of the coupling piece (60), the second recess steps (67'',68'') communicating with the first recess steps (67',68') being arranged in the wall (34,64).

3. Shiftable pedal bearing gear according to claims 1 and 2, characterised in that the second recess steps (67'',68'') provided in the chain wheel (35;135) and in the disc (65;165) are each designed as an aperture penetrating the wall (34,64) of the chain wheel and the disc.

4. Shiftable pedal bearing gear according to one of claims 1 to 3, characterised in that the disc (65) is designed as a sun wheel provided with external teeth (66) and the gear housing (40) has an annular part (42) provided with internal teeth (43), the disc (65) as well as the gear housing (40) with their teeth (66,43) engaging and cooperating with at least one planet wheel (45) mounted on the chain wheel (35) and provided with external teeth (46).

5. Shiftable pedal bearing gear according to one of claims 1 to 3, characterised in that on the disc (165) arranged between the chain wheel (135) and the back wall (141) of the gear housing (140) there is mounted at least one planet wheel (145) which is provided with external teeth (146) and cooperates on the one hand with the back wall (141) designed as a sun wheel and provided with external teeth (144) and on the other hand with an annular part (142) of the gear housing (140) provided with internal teeth (143) and arranged radially at a distance from the external teeth (144) of the back wall (141).

6. Shiftable pedal bearing gear according to claim 1, characterised in that a gap (44) provided between the chain wheel (35) and the gear housing (40) is closed by a cover (33) which is substantially 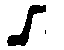 -shaped in the profile cross section, the cover (33) on the one hand being fastened on the gear housing (40) by a flange (32) and on the other hand cooperating in a sealing manner under initial tension with a radially inwardly directed circular web (32') with a seal (31) arranged in the lateral wall (35') of the chain wheel (35).

7. Shiftable pedal bearing gear according to claim 1, characterised in that each pedal crank (1,2) has a recess (3) designed to receive an adjusting element (5) which can be screwed onto the drive shaft (20) and the shift element (50,50'), the individual shift element (50,50') with an integrally shaped hub part (53) cooperating with the shift shaft (55) and being movably guided in a sealed manner in the axial direction of the drive shaft (20) in a bore (22) therein.

8. Shiftable pedal bearing gear according to claim 7, characterised in that the individual shift element (50,50') is provided with an annular part (52) integrally shaped in the form of a hood, the annular part (52) being designed such that it is arranged in the recess (3) in the respective pedal crank (1,2) in each position of the individual shift element (50,50').

9. Shiftable pedal bearing gear according to claim 1, characterised in that the two pedal cranks (1,2) are each fastened on the drive shaft (20) by means of an adjusting element (6) which can be screwed into a threaded bore (24,24') and the hood-shaped shift element (50,50') is movably guided in a sealed manner in each case with the hub part (53) in a bore (6'') in the adjusting element (6).

10. Shiftable pedal bearing gear according to claim 1, characterised in that a torque preventer (25;125) is provided which has a bracket (26;126) fastened on the gear housing and orientated in the direction of a frame part and a lever arm (27;129) resting tangentially on the gear housing and cooperating with an arcuate portion with the tubular frame part.

## Revendications

1. Pédalier avec changement de vitesse, pour bicyclette ou engin analogue, composé d'un boîtier de pédalier (15), d'un boîtier de transmission (40, 140), d'un pignon à chaîne (35, 135), d'un disque (65, 165) parallèle au pignon, d'un arbre d'entraînement (20) traversant axialement le boîtier de pédalier (15) et en liaison active avec des manivelles (1, 2), d'un axe de commutation (55) monté à l'intérieur de l'arbre (20) et en liaison active, à chacune de ses extrémités, avec un organe de commutation (50, 50') dont la manoeuvre entraîne, par l'intermédiaire de l'axe (55) le coulissement axial d'une pièce d'accouplement (60) qui peut venir en prise avec des évidements du pignon à chaîne ou du disque, répartis périphériquement sur les parois latérales,
caractérisé en ce que
les évidements distincts (67, 68, 167, 168) partant des parois latérales en regard (35', 65' ; 135', 165') présentent chacune une forme étagée descendante selon la direction axiale d'entrée de la pièce d'accouplement (60) dans l'évidement de sorte que la pièce d'accouplement (60), qui peut être associée au pignon à chaîne (35 ; 135) ou au disque (65 ; 165), est amenée, dans une première phase, en prise dans un premier étage d'évidement (67, 68') avec existence d'un jeu orienté selon la direction de rotation des pièces individuelles et, dans une deuxième phase, en prise sans jeu avec blocage par combinaison de formes, dans un second étage d'évidement (67'', 68'') de chaque évidement (67, 68 ; 167, 168).

2. Pédalier avec changement de vitesse selon la revendication 1,
caractérisé en ce que
les premiers étages d'évidement (67', 68') pratiqués respectivement dans le pignon à chaîne (35 ; 135) et dans le disque (65 ; 165) sont délimités chacun par une paroi (34, 64) du pignon ou du disque partant d'une des faces latérales en regard (35', 65' ; 135', 165') selon la direction d'entrée de la pièce d'accouplement (60) dans l'évidement, les seconds étages d'évidement (67'', 68'') en liaison avec les premiers (67', 68') se trouvant dans l'épaisseur de la paroi (34, 64).

3. Pédalier avec changement de vitesse selon les revendications 1 et 2,
caractérisé en ce que
les seconds étages d'évidement (67'', 68'') prévus dans le pignon à chaîne (35, 135) et dans le disque (65, 165) sont constitués chacun par une découpe traversant la paroi (34, 64) du pignon à chaîne et du disque.

4. Pédalier avec changement de vitesse selon une des revendications 1 à 3,
caractérisé en ce que
le disque (65) est constitué par une roue solaire portant une denture externe (66) tandis que le boîtier de transmission (40) présente une partie annulaire (42) portant une denture interne (43), le disque (65) et le boîtier de transmission (40) étant en liaison active avec au moins une roue planétaire (45) montée sur le pignon à chaîne (35) et portant une denture externe (46) en prise avec les dentures (66, 43).

5. Pédalier avec changement de vitesse selon une des revendications 1 à 3,
caractérisé en ce que
sur le disque (165) situé entre le pignon à chaîne (135) et la paroi arrière (141) du boîtier de transmission (140) est montée au moins une roue planétaire (145) qui porte une denture externe (146) et qui est en liaison active d'une part avec la paroi arrière (141) constituée en roue solaire portant une denture externe (144), d'autre part avec une partie annulaire (142) du boîtier de transmission (140), portant une denture interne (143) et située a une certaine distance, en direction radiale, de la denture externe (144) de la paroi arrière (141).

6. Pédalier avec changement de vitesse selon la revendication 1,
caractérisé en ce qu'
un intervalle (44) prévu entre le pignon à chaîne (35) et le boîtier de transmission (40) est obturé par un couvercle (33) présentant en coupe, un profil en forme de 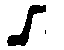 , ce couvercle étant d'une part fixé par une bride (32) sur le boîtier de transmission (40), d'autre part en liaison active par l'intermédiaire d'une partie annulaire circulaire (32') dirigée radialement vers l'intérieur, avec un joint d'étanchéité (31) logé dans la paroi latérale (35') du pignon à chaîne (35), avec pression sur ce joint de manière à assurer l'étanchéité.

7. Pédalier avec changement de vitesse selon la revendication 1,
caractérisé en ce que
chaque manivelle de pédalage (1, 2) présente un évidemment conçu pour recevoir un organe de réglage (5) vissable sur l'arbre d'entraînement (20), ainsi que l'organe de commutation (50, 50'), cet organe pouvant par une partie en forme de moyeu (53) en liaison active avec l'axe de commutation (55), coulisser selon la direction axiale de l'arbre (20) à l'intérieur d'un alésage (22) de cet arbre, avec étanchéité.

8. Pédalier avec changement de vitesse selon la revendication 7,
caractérisé en ce que
chaque organe de commutation (50, 50') comporte une partie annulaire (52) qui a une forme de chapeau et est constituée de manière qu'elle se trouve toujours à l'intérieur de l'évidement (3) de la manivelle correspondante (1, 2), quelle que soit la position de l'organe de commutation (50, 50').

9. Pédalier avec changement de vitesse selon la revendication 1,
caractérisé en ce que
les deux manivelles de pédalage (1, 2) sont fixées chacune sur l'arbre d'entraînement (20) par l'intermédiaire d'un organe de réglage (6) vissable dans un alésage fileté (24, 24'), chaque organe de commutation (50, 50') en forme de chapeau pouvant coulisser par son moyeu (53) dans un alésage (6'') de l'organe de réglage (6), avec étanchéité.

10. Pédalier avec changement de vitesse selon la revendication 1,
caractérisé en ce qu'
il est prévu une sécurité de couple (25, 125), comprenant une patte (26, 126) fixée sur le boîtier de transmission et orientée selon la direction d'une pièce du cadre de la bicyclette, ainsi qu'un bras de levier (27, 129) en appui tangentiel sur le boîtier de transmission et en liaison active avec une pièce tubulaire du cadre par une partie recourbée en arc de cercle.
